# NEUE EUROPÄISCHE PATENTSCHRIFT

(11) **EP 3 143 300 B2**
(45) Veröffentlichungstag und Bekanntmachung des Hinweises auf die Entscheidung über den Einspruch: **20.10.2021**
(45) Hinweis auf die Patenterteilung: 22.08.2018
(21) Anmeldenummer: 15726535.6
(22) Anmeldetag: 05.05.2015
(51) Int. Cl.: F16D 25/0638

(54) **DREHMOMENTÜBERTRAGUNGSVORRICHTUNG FÜR HYBRIDFAHRZEUG**
TORQUE TRANSMISSION DEVICE FOR A HYBRID VEHICLE
DISPOSITIF DE TRANSMISSION DE COUPLE POUR VÉHICULE HYBRIDE

(30) Priorität: 16.05.2014 DE 102014209356
(43) Veröffentlichungstag der Anmeldung: 22.03.2017
(73) Patentinhaber: Schaeffler Technologies AG & Co. KG, 91074 Herzogenaurach (DE)
(72) Erfinder: TRINKENSCHUH, Andreas, 77815 Bühl (DE); RUDER, Willi, 77933 Lahr (DE); NACHTMANN, Florian, 67610 La Wantzenau (FR); ENGELMANN, Dominique, 67850 Offendorf (FR)
(74) Vertreter: Winter, Brandl - Partnerschaft mbB
(86) Internationale Anmeldenummer: PCT/DE2015/200296
(87) Internationale Veröffentlichungsnummer: WO 2015/172784

(56) Entgegenhaltungen:
- EP-A1- 1 710 113
- EP-A2- 1 482 171
- EP-A2- 2 706 260
- WO-A1-2008/025691
- WO-A1-2008/025691
- WO-A1-2009/152799
- WO-A1-2012/149922
- CN-A- 101 595 320
- CN-A- 101 595 320
- DE-A1- 10 005 582
- DE-A1- 10 005 996
- DE-A1- 19 952 233
- DE-A1-102008 006 062
- DE-A1-102009 022 272
- DE-A1-102009 022 272
- DE-A1-102009 024 743
- DE-A1-102009 039 076
- DE-A1-102009 042 838
- DE-A1-102009 042 838
- DE-A1-102010 030 690
- DE-A1-102010 054 545
- DE-A1-102010 063 388
- DE-A1-102011 014 097
- DE-A1-102011 102 396
- DE-A1-102012 219 799
- KR-B1- 100 787 375
- KR-B1- 100 787 375
- "Teil 3: Schwingungstechnik" In: "Fachbuch: Handbuch Fahrzeugakustik", pages 19-48,
- Peinemann Bernd: "Drehzahladaptiver Tilger - eine Alternative für die Schwingungsreduzierung?", ATZ Automobiltechnische Zeitschrift, vol. 103, 2001, pages 290-296,

## Beschreibung

Die Erfindung betrifft eine Drehmomentübertragungsvorrichtung zur Anordnung in einem Antriebsstrang eines Hybridfahrzeugs, gemäß dem Oberbegriff von Patentanspruch 1.

Gattungsgemäße Drehmomentübertragungsvorrichtungen sind im Automotive-Bereich in vielen Fällen gebräuchlich bzw. erforderlich zur steuerbaren und ggf. trennbaren Kraftübertragung zwischen Verbrennungsmotor, Elektromaschine und Getriebe. Hierzu übernimmt eine gattungsgemäße Drehmomentübertragungsvorrichtung einerseits die Funktion der Drehmomentübertragung vom Verbrennungsmotor und/oder von der Elektromaschine zu einer Abtriebswelle bzw. zu einem Getriebe, und andererseits die Funktion der Drehschwingungsdämpfung zwischen Verbrennungsmotor, Getriebe und/oder Elektromaschine.

Die Drehmomentübertragungsvorrichtung kann zusätzlich auch zum Starten des Verbrennungsmotors eingerichtet sein. Zumeist ist dabei die Elektromaschine in die Drehmomentübertragungsvorrichtung integriert, was die häufig geforderte, insbesondere axial platzsparende Bauweise ermöglicht.

Üblicherweise besitzen gattungsgemäße Drehmomentübertragungsvorrichtungen eine Trennkupplung, mit der der Kraftfluss zwischen Verbrennungsmotor und Getriebe und/oder Elektromaschine je nach Betriebssituation geschlossen oder getrennt werden kann, beispielsweise beim Stillstand des Fahrzeugs oder beim rein elektrischen Fahr- bzw. Schubbetrieb. Teilweise wird der Verbrennungsmotor auch mittels der Elektromaschine über die hierzu geschlossene Trennkupplung gestartet. Bei anderen Ausführungen wird der Motor bei geöffneter Kupplung gestartet, und die Trennkupplung wird erst bei Drehzahlgleichheit von Motor und Getriebe geschlossen.

Zur Drehschwingungsisolierung bzw. Drehschwingungsdämpfung können dabei in oder an der Drehmomentübertragungsvorrichtung eine oder mehrere rotierende Schwungmassen bzw. Drehschwingungsdämpfer vorgesehen sein, z.B. in Form eines Bogenfederdämpfers oder eines Fliehkraftpendels, oder in Form einer Kombination hieraus.

Insgesamt übernimmt eine gattungsgemäße Drehmomentübertragungsvorrichtung somit neben der Steuerung des Kraftflusses wichtige Aufgaben im Bereich der Drehschwingungsisolation, welche im Hinblick auf den akustischen Komfort, im Hinblick auf die Getriebelebensdauer und im Hinblick auf niedrigen Kraftstoffverbrauch von Bedeutung sind. Eine gute Drehschwingungsisolation ermöglicht auch bei geringen Drehzahlen eine schlupffreie und geräuscharme Drehmomentübertragung zwischen dem Verbrennungsmotor und dem Getriebe, insbesondere im Fall von automatisierten Getrieben wie beispielsweise Doppelkupplungsgetrieben, stufenlosen Getrieben oder Stufenautomaten in Hybridfahrzeugen.

Durch die enthaltene Vielzahl an Funktionen und Komponenten erfordern gattungsgemäße Drehmomentübertragungsvorrichtungen zumeist jedoch erheblichen Bauraum, insbesondere in axialer Richtung.

Es sind Drehmomentübertragungsvorrichtungen mit kurbelwellenseitigem Primärdämpfer, beispielsweise mit Bogenfederdämpfer bekannt, wobei zur verbesserten Schwingungsdämpfung insbesondere bei niedrigen Motordrehzahlen ein Fliehkraftpendel als Sekundärdämpfer in den Primärdämpfer integriert bzw. im unmittelbaren Bereich des Primärdämpfers angeordnet wurde, bei einem Bogenfederdämpfer vorzugsweise auf der bereits teilweise schwingungsgedämpften Sekundärseite des Bogenfederdämpfers. Bei dieser Anordnung ist ein Fliehkraftpendel, welches schwingungsmäßig einen zu den rotierenden Massen der Drehmomentübertragungsvorrichtung parallelgeschalteten Schwingungstilger darstellt, besonders wirksam. Ein Tilger, beispielsweise ein Fliehkraftpendel, hat u.a. den Vorteil, dass die Elastizität des Antriebsstrangs hierdurch nicht verändert wird, so dass eine unmittelbare Beeinflussung insbesondere der Agilität des Fahrzeuges nicht gegeben ist.

Allerdings weisen so gestaltete Drehmomentübertragungsvorrichtungen vergleichsweise hohe Massenträgheitsmomente auf, und der vom Primärdämpfer zusammen mit dem im unmittelbaren Bereich des Primärdämpfers angeordneten Sekundärdämpfer bzw. Tilger beanspruchte Bauraum ist wieder verhältnismäßig groß. Dies kann im Gegenzug dazu führen, dass ein nicht optimal dimensionierter bzw. zu kleiner Primärdämpfer verwendet werden muss, wodurch die Isolationsanforderungen bezüglich der Schwingungen für das Getriebe schwer oder nicht erreicht werden.

Derartige Einschränkungen bezüglich des zur Verfügung stehenden Bauraums für den Primärdämpfer können auch aus kundenseitig vorgegebenen Einbau-Randbedingungen und/oder daher rühren, dass die gegebene Elektromaschine einen verhältnismäßig großen axialen Bauraum beansprucht.

Aus der DE 10 2009 022 272 A1 ist eine Drehmomentübertragungsvorrichtung gemäß dem Oberbegriff des Anspruchs 1 bekannt.
Bezüglich weiteren Standes der Technik wird auf die DE 10 2009 042 838 A1, die WO 2008/025691 A1, die CN 101 595 320 A und die KR 100 787 375 B1 verwiesen. Mit diesem Hintergrund ist es Aufgabe der vorliegenden Erfindung, eine Drehmomentübertragungsvorrichtung zu schaffen, mit der sich die eingangs dargestellte Problematik im Anforderungsfeld aus Kundenanforderungen, Bauraumeinschränkungen und gewünschter optimaler Drehschwingungsdämpfung, bei gleichzeitig einfachem und robustem Aufbau der Drehmomentübertragungsvorrichtung lösen lässt.
Diese Aufgabe wird gelöst durch eine Drehmomentübertragungsvorrichtung gemäß dem Patentanspruch 1.

Die Drehmomentübertragungsvorrichtung gemäß der vorliegenden Erfindung dient dabei in zunächst bekannter Weise der Anordnung in einem Antriebsstrang insbesondere eines Hybridfahrzeugs mit Verbrennungsmotor und Getriebe, sowie mit elektrischem Antrieb in Form einer in die Drehmomentübertragungsvorrichtung integrierten Elektromaschine. Die Elektromaschine weist einen um eine Mittenlängsachse der Drehmomentübertragungsvorrichtung rotierbaren Rotor auf, während die Drehmomentübertragungsvorrichtung eine Trennkupplung mit Kupplungsbetätigung zum Entkuppeln des Verbrennungsmotors vom Getriebe, sowie einen kurbelwellenseitigen Drehschwingungsdämpfer (nachfolgend als Primärdämpfer bezeichnet) aufweist. Gattungsgemäss zeichnet sich die Drehmomentübertragungsvorrichtung dadurch aus, dass radial und axial innerhalb des Rotors der Elektromaschine ein getriebeseitiger Drehschwingungsdämpfer angeordnet ist (nachfolgend als Sekundärdämpfer bezeichnet), der unmittelbar im getriebeseitigen Abtriebsflansch der Drehmomentübertragungsvorrichtung angeordnet ist.
"Unmittelbar im getriebeseitigen Abtriebsflansch" soll im Sinne der Erfindung dabei bedeuten, dass der Sekundärdämpfer (zunächst einmal unabhängig davon, ob es sich beispielsweise um einen seriellen Drehschwingungsdämpfer oder einen parallelen Tilger handelt) im unmittelbaren Bereich des getriebeseitigen Abtriebsflanschs angeordnet und unmittelbar mit dem getriebeseitigen Abtriebsflansch verbunden ist, und/oder (insbesondere zur Aufnahme z.B. eines seriellen Drehschwingungsdämpfers) zusammen mit dem getriebeseitigen Abtriebsflansch eine gemeinsame Baugruppe bildet. Die Anordnung eines Sekundärdämpfers innerhalb des Rotors der Elektromaschine sowie unmittelbar im getriebeseitigen Abtriebsflansch ist vorteilhaft erfindungsgemäss und in mehrfacher Hinsicht. Einerseits ergibt sich auf diese Weise eine Vergrößerung des Bauraums für den kurbelwellenseitigen Primär-Drehschwingungsdämpfer, beispielsweise für den Bogenfederdämpfer, da ein etwaiger Sekundärdämpfer, beispielsweise Tilger, nicht mehr im unmittelbaren Bereich des Primärdämpfers anzuordnen ist, sondern entfernt vom Primärdämpfer und gleichzeitig platzsparend innerhalb des Rotors der Elektromaschine angeordnet werden kann.
Auf diese Weise steht für den kurbelwellenseitigen Primärdämpfer ein größerer Bauraum zur Verfügung, so dass sich dieser leichter optimal auslegen lässt. Bei Drehmomentübertragungsvorrichtungen, die ursprünglich keinen Sekundärdämpfer aufweisen, kann der Primärdämpfer dank der Erfindung hingegen ggf. kleiner und kompakter ausgelegt werden, da der Sekundärdämpfer die Schwingungsdämpfung durch den Primärdämpfer unterstützt und optimiert.
Da der Sekundärdämpfer erfindungsgemäß innerhalb des Rotors der Elektromaschine sowie unmittelbar im getriebeseitigen Abtriebsflansch der Drehmomentübertragungsvorrichtung angeordnet ist, benötigt dieser nur geringen bis gar keinen zusätzlichen Bauraum. Dies bedeutet, dass durch den ggf. kleiner dimensionierbaren Primärdämpfer zusätzlicher Bauraum zur Verfügung steht bzw. frei wird, der entweder zu einer Verkleinerung, insbesondere axialen Verkürzung der Drehmomentübertragungsvorrichtung eingesetzt werden kann, oder beispielsweise zur Vergrößerung der Elektromaschine, wodurch wieder weiterer zusätzlicher Bauraum innerhalb des Rotors der Elektromaschine entsteht. Nicht zuletzt ist die Anordnung des Sekundärdämpfers unmittelbar im Abtriebsflansch vorteilhaft im Hinblick auf eine Mehrfachnutzung des Bauteils bzw. der Baugruppe "Abtriebsflansch".
Gemäß einer weiteren besonders bevorzugten Ausführungsform ist zudem die Kupplungsbetätigung der Trennkupplung, umfassend zumindest Kupplungsaktor und Tellerfeder, kurbelwellenseitig bezüglich des getriebeseitigen Abtriebsflanschs der Drehmomentübertragungsvorrichtung angeordnet, und dabei vorzugsweise vollständig innerhalb des Rotors der Elektromaschine positioniert.

Diese Ausführungsform bedeuten mit anderen Worten, dass die Kupplungsbetätigung für die Trennkupplung der Drehmomentübertragungsvorrichtung nicht mehr (mit erhöhtem Bauraumbedarf) getriebeseitig bezüglich des Abtriebsflanschs (also zumindest teilweise außerhalb der Drehmomentübertragungsvorrichtung) angeordnet ist, sondern dass die Kupplungsbetätigung bezüglich des Abtriebsflanschs nunmehr kurbelwellenseitig angeordnet ist, also vollständig innerhalb der Drehmomentübertragungsvorrichtung, vorzugsweise komplett innerhalb des Rotors der Elektromaschine.

Auf diese Weise ergibt sich eine weitere Optimierung bzw. Verringerung des für die Drehmomentübertragungsvorrichtung benötigten Bauraums. Da sich auf diese Weise (aufgrund des Wegfalls der bezüglich des Abtriebsflanschs getriebeseitig angeordneten Kupplungsbetätigung) der getriebeseitige Abtriebsflansch der Drehmomentübertragungsvorrichtung zudem am äußersten getriebeseitigen Ende der Drehmomentübertragungsvorrichtung anordnen lässt, sowie zusammen mit der erfindungsgemäßen Anordnung des Sekundärdämpfers unmittelbar im getriebeseitigen Abtriebsflansch, wird innerhalb des Rotors der Elektromaschine zusätzlicher Bauraum in erheblichem Maße frei. Ferner erübrigt sich der sonst notwendige Durchgriff von der Tellerfeder durch den Abtriebsflansch auf die Druckplatte der Kupplung, der hierzu erforderliche axiale und radiale Bauraum ebenso wie die hierzu erforderlichen Ausnehmungen im Abtriebsflansch.

Bei dieser Ausführungsform kann zudem die Kupplungsbetätigung, insbesondere der Kupplungsaktor, vorzugsweise im radial inneren Bereich des Bauraums innerhalb des Rotors angeordnet werden, wodurch im radial äußeren Bereich des Bauraums innerhalb des Rotors zusätzlich weiterer Bauraum verfügbar wird.

Die Erfindung wird unabhängig davon verwirklicht, wie die Trennkupplung aufgebaut ist, also unabhängig davon, ob es sich beispielsweise um eine Einscheiben-Kupplung, eine MehrscheibenKupplung, oder um eine nass bzw. trocken laufende Kupplung handelt.

Mit dem Hintergrund des dank der Erfindung vergrößerbaren Bauraums insbesondere innerhalb des Rotors der Elektromaschine ist gemäß einer weiteren bevorzugten Ausführungsform der Erfindung vorgesehen, dass die Trennkupplung eine Lamellenkupplung, also eine Mehrscheiben-Kupplung ist. Da durch die erfindungsgemäße Anordnung des Sekundärdämpfers, wie vorstehend ausgeführt, Bauraum in ggf. erheblichem Maße insbesondere im radial äußeren Bereich innerhalb des Rotors der Elektromaschine frei wird, kann dort mit Vorteil eine Mehrscheiben-Kupplung angeordnet werden. Hierdurch wird es möglich, große Drehmomente auf relativ kleinem Bauraum, insbesondere mit verhältnismäßig kleinem Kupplungsdurchmesser zu übertragen. Die Kupplung kann dabei trocken oder nass ausgeführt sein, in Abhängigkeit davon, ob der Bauraum innerhalb des Rotors der Elektromaschine als Trockenraum oder als Nassraum ausgeführt ist. Letzteres gilt auch für eine Einscheiben-Kupplung, die alternativ zur MehrscheibenKupplung ebenfalls bauraumsparend innerhalb des Rotors der Elektromaschine angeordnet werden kann.
Eine weitere bevorzugte Ausführungsform der Erfindung sieht vor, dass die Gehäuseabstützung der Kupplungsbetätigung fest mit dem Statorgehäuse verbunden ist. Auf diese Weise ergibt sich eine weitere Verkleinerung des erforderlichen Bauraums, insbesondere gegenüber bekannten Drehmomentübertragungsvorrichtungen, bei denen die Kupplungsbetätigung (bezüglich des Abtriebsflanschs) getriebeseitig an der Drehmomentübertragungsvorrichtung angeordnet ist, und bei denen die Abstützung der Kupplungsbetätigung separat vom Gehäuse der Drehmomentübertragungsvorrichtung bzw. der Elektromaschine erfolgt. Auch kann hierdurch eine potentielle Überbestimmung der gegenseitigen Lagerung zwischen Stator, Rotor und Antriebsflansch bzw. Antriebswelle der Drehmomentübertragungsvorrichtung vermieden werden, indem Statorgehäuse und Abstützung der Kupplungsbetätigung kurbelwellenseitig unmittelbar fest miteinander verbunden werden.
Auch diese vorteilhafte Ausführungsform wird erst mit der erfindungsgemäßen, bauraumsparenden Anordnung des Sekundärdämpfers unmittelbar im getriebeseitigen Abtriebsflansch ermöglicht, sowie mit der dadurch (aufgrund des Bauraumgewinns im Inneren des Rotors) ermöglichten Anordnung der Kupplungsbetätigung kurbelwellenseitig vom Abtriebsflansch, innerhalb und vorzugsweise komplett innerhalb des Rotors der Elektromaschine.
Die Erfindung wird zunächst unabhängig davon verwirklicht, um welche Art von Drehschwingungsdämpfer es sich bei dem getriebeseitigen Sekundärdämpfer handelt, solange sich dieser erfindungsgemäß unmittelbar im getriebeseitigen Abtriebsflansch der Drehmomentübertragungsvorrichtung anordnen lässt.
Gemäß einer erfindungsgemäßen Ausführungsform der Erfindung umfasst der Sekundärdämpfer einen zu den drehenden Massen der Drehmomentübertragungsvorrichtung, insbesondere zum Rotor der Elektromaschine parallel geschalteten Schwingungstilger, nämlich einen Fliehkraftpendel-Dämpfer. Ein als Fliehkraftpendel ausgeführter Tilger hat den Vorteil, dass er seine Dämpfungseigenschaften drehzahlabhängig selbsttätig anpasst, und so in einem breiten Drehzahlbereich wirksam ist.

Gemäß einer nicht erfindungsgemäßen Variante umfasst der Sekundärdämpfer einen seriell in den Kraftfluss durch die Drehmomentübertragungsvorrichtung geschalteten Drehschwingungsdämpfer, beispielsweise einen Torsionsdämpfer mit Schraubenfedern, ausgeführt insbesondere als Bogenfederdämpfer oder mit geraden Druckfedern. In diesem Fall bildet der Sekundärdämpfer zusammen mit dem getriebeseitigen Abtriebsflansch der Drehmomentübertragungsvorrichtung eine gemeinsame Baugruppe.

Auch können beide Arten von Dämpfern kombiniert eingesetzt werden, in dem diese beispielsweise radial verteilt auf unterschiedlichen Durchmessern des Abtriebsflanschs angeordnet werden, bzw. zusammen mit dem Abtriebsflansch eine gemeinsame Baugruppe bilden.

Beispielhaft für mögliche Ausführungsformen zeigen die Figuren jeweils erfindungsgemäße Drehmomentübertragungsvorrichtungen. Dabei zeigt
**Fig. 1** in schematischer Schnittdarstellung eine Drehmomentübertragungsvorrichtung gemäß einer Ausführungsform der Erfindung; und
**Fig. 2** in einer Fig. 1 entsprechenden Darstellung eine Drehmomentübertragungsvorrichtung gemäß einer nicht erfindungsgemäßen Variante.

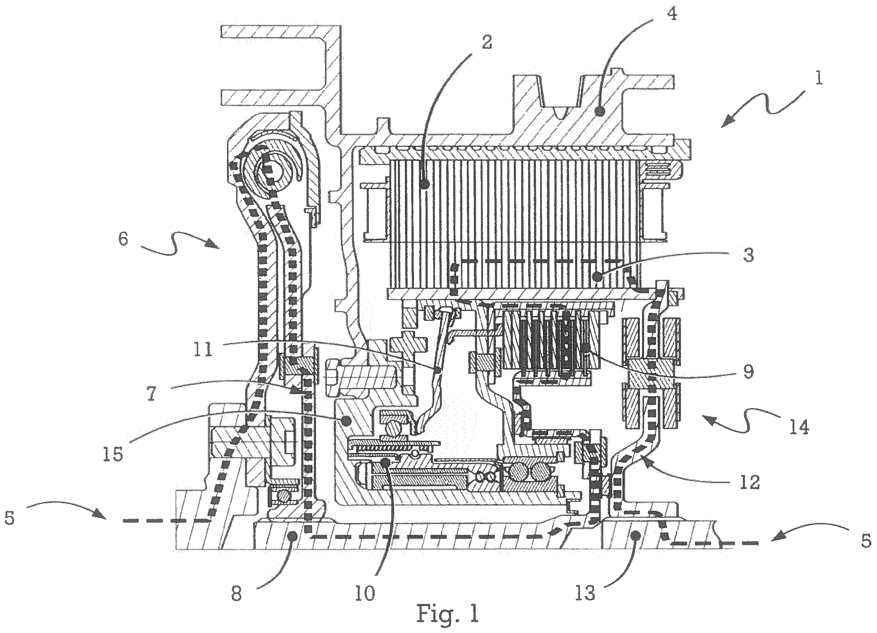

**Fig. 1** zeigt eine Drehmomentübertragungsvorrichtung gemäß einer Ausführungsform der vorliegenden Erfindung. Man erkennt zunächst Stator 2 und Rotor 3 der in der Drehmomentübertragungsvorrichtung integrierten Elektromaschine 1. Der Stator 2 der Elektromaschine 1 ist in einem Statorgehäuse 4 angeordnet, welches vorliegend gleichzeitig das Gehäuse 4 der Drehmomentübertragungsvorrichtung bildet. Ferner erkennt man den Kraft- bzw. Momentenfluss, der in Form einer die Drehmomentübertragungsvorrichtung durchlaufenden strichlierten Linie 5 eingezeichnet ist. Das Drehmoment wird kurbelwellenseitig (zeichnungsbezogen links) über einen Bogenfederdämpfer 6, von der Kurbelwelle kommend über einen Antriebsflansch 7 und eine Antriebswelle 8 in die Drehmomentübertragungsvorrichtung eingeleitet.

Von der Antriebswelle 8 gelangt das Drehmoment in die hier als Lamellenkupplung ausgeführte Trennkupplung 9, welche über eine Tellerfeder 11 und einen Kupplungsaktor 10 betätigt wird. Anstelle der Lamellenkupplung kann beispielsweise auch eine Einscheiben-Trockenkupplung als Trennkupplung 9 im Bauraum innerhalb des Rotors 3 der Elektromaschine 1 angeordnet werden. Man erkennt, dass die aus Tellerfeder 11 und Kupplungsaktor 10 bestehende Kupplungsbetätigung bauraumsparend im radial inneren Bereich innerhalb des Rotors 3 der Elektromaschine 1 untergebracht ist. Anstelle der dargestellten Tellerfeder kann beispielsweise auch ein weitestgehend starrer Drucktopf zur Kupplungsbetätigung eingesetzt werden, während der Kupplungsaktor anstelle als elektromechanischer Aktor (wie dargestellt) auch als hydraulischer Kupplungsaktor ausgeführt sein kann.

Die abtriebsseitigen Lamellen der Trennkupplung 9 sind dabei mit dem Rotor 3 der Elektromaschine 1 und über diesen mit dem Abtriebsflansch 12 der Drehmomentübertragungsvorrichtung verbunden. Der Abtriebsflansch 12 ist drehfest mit der Abtriebswelle 13 verbunden, die das Drehmoment zeichnungsbezogen rechts in das (nicht dargestellte) Schaltgetriebe einleitet.

Unmittelbar in den getriebeseitigen Abtriebsflansch 12 ist erfindungsgemäß ein Sekundär-Drehschwingungsdämpfer 14 integriert. Die Anordnung des Sekundärdämpfers 14 unmittelbar im Abtriebsflansch 12, bzw. die Kombination von Sekundärdämpfer 14 und Abtriebsflansch 12 als eine einzige Baugruppe, ist im Vergleich zum Stand der Technik besonders bauraumsparend, Zudem unterstützt bzw. entlastet der Sekundärdämpfer 14 den Primärdämpfer 6, so dass der Primärdämpfer ggf. kleiner und damit platzsparender dimensioniert werden kann. Hierdurch steht mehr Bauraum für andere Baugruppen, insbesondere für eine ggf. längere Elektromaschine 1 zur Verfügung, oder die Drehmomentübertragungsvorrichtung kann insgesamt kürzer gebaut werden.

Auch begünstigt die Anordnung des Sekundärdämpfers 14 unmittelbar im Abtriebsflansch 12 die in Fig. 1 gezeigte, besonders kompakte Positionierung der Kupplungsbetätigung 10, 11 innerhalb des Rotors 3 der Elektromaschine 1.

Zusammen mit der Vereinigung des Sekundärdämpfers 14 mit dem Abtriebsflansch 12 zu einer einzigen Baugruppe ergeben sich hiermit erhebliche konstruktive Vereinfachungen, und es wird Bauraum in erheblichem Maße innerhalb des Rotors 3 der Elektromaschine 1 frei. Dieser wird hier genutzt, um eine vom Durchmesser her kompakte, jedoch aufgrund der Lamellenbauweise dennoch hohe Drehmomente übertragende Mehrscheibenkupplung 9 innerhalb des Rotors 3 der Elektromaschine 1 unterzubringen. Auch wird es hierdurch möglich, die Gehäuseabstützung 15 der Kupplungsbetätigung 10, 11 unmittelbar und fest mit dem Statorgehäuse bzw. Gehäuse 4 der Drehmomentübertragungsvorrichtung zu verbinden, was konstruktive Vereinfachungen mit sich bringt, und die im Stand der Technik vorzufindenden, komplex verschachtelten Lagerungen zwischen Statorgehäuse 4, Rotor 3 und Antriebswelle 8, und die damit verbundenen potentiellen Probleme bezüglich Überbestimmung der Lagerung und/oder Körperschallübertragung zu vermeiden hilft.

Der Sekundärdämpfer 14 ist hier als Fliehkraftpendel, somit als Schwingungstilger, der zu den rotierenden Massen der Drehmomentübertragungsvorrichtung parallel geschaltet ist, ausgebildet.

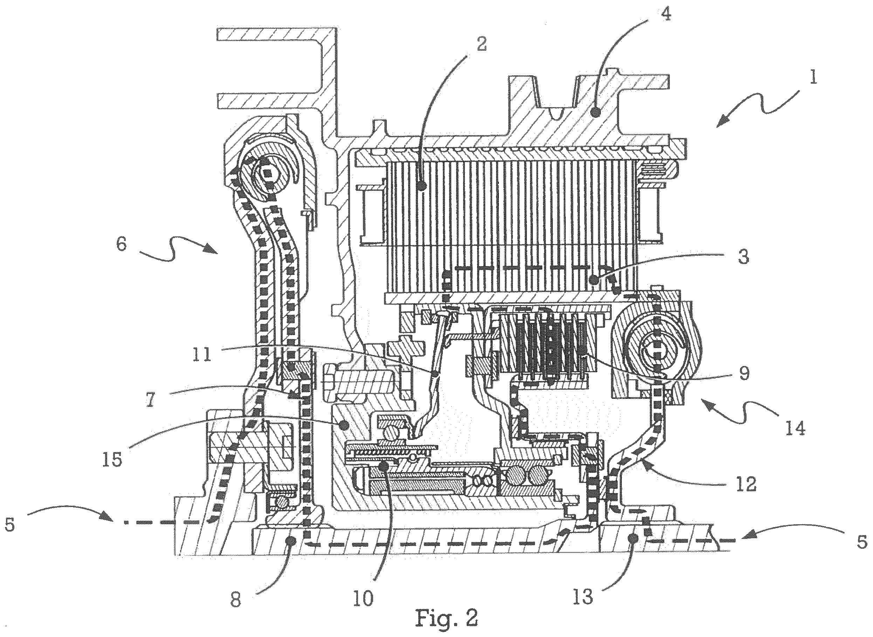

**Fig. 2** zeigt eine Drehmomentübertragungsvorrichtung, die mit der Drehmomentübertragungsvorrichtung gemäß Fig. 1 im Wesentlichen übereinstimmt, insbesondere was den Primärdämpfer 6, die Elektromaschine 1, die Trennkupplung 9 mit Kupplungsbetätigung 10, 11 und den Drehmomentfluss 5 durch die Drehmomentübertragungsvorrichtung betrifft.

Im Unterschied zu der Drehmomentübertragungsvorrichtung gemäß Fig. 1 ist der Sekundärdämpfer 14 bei der Drehmomentübertragungsvorrichtung gemäß Fig. 2 nicht als schwingungsmäßig paralleler Tilger, sondern als Bogenfederdämpfer 14 ausgebildet, welcher unmittelbar in den Abtriebsflansch 12 integriert ist, bzw. zusammen mit dem Abtriebsflansch 12 als eine gemeinsame Baugruppe ausgebildet ist. Auch auf diese Weise ergibt sich die gewünschte Unterstützung der Schwingungsdämpfung des Primärdämpfers 6 durch den Sekundärdämpfer 14, wodurch der Primärdämpfer ggf. kompakter ausgelegt werden kann, was wiederum eine Vergrößerung des Bauraums für andere Komponenten, oder eine kompaktere Gestaltung der gesamten Drehmomentübertragungsvorrichtung ermöglicht.

### Bezugszeichenliste

- 1: Elektromaschine
- 2: Stator der Elektromaschine
- 3: Rotor der Elektromaschine
- 4: Gehäuse
- 5: Kraftfluss (Momentenfluss)
- 6: Primär-Schwingungsdämpfer
- 7: Antriebsflansch
- 8: Antriebswelle
- 9: Trennkupplung
- 10: Kupplungsaktor
- 11: Tellerfeder
- 12: Abtriebsflansch
- 13: Abtriebswelle
- 14: Sekundär-Schwingungsdämpfer
- 15: Gehäuseabstützung

## Patentansprüche

1. Drehmomentübertragungsvorrichtung zur Anordnung in einem Antriebsstrang eines Hybridfahrzeugs mit einem Verbrennungsmotor, einem Getriebe und einer Elektromaschine (1), wobei die Drehmomentübertragungsvorrichtung aufweist: die Elektromaschine (1), die in der Drehmomentübertragungsvorrichtung angeordnet ist und einen um eine Mittenlängsachse der Drehmomentübertragungsvorrichtung rotierbaren Rotor (3) aufweist, eine Trennkupplung (9) mit Kupplungsbetätigung (10, 11) zum Entkuppeln des Verbrennungsmotors von dem Getriebe, einen kurbelwellenseitigen Primär-Drehschwingungsdämpfer (6), und einen radial innerhalb des Rotors (3) angeordneten, getriebeseitigen Sekundär-Drehschwingungsdämpfer (14), der unmittelbar in einem getriebeseitigen Abtriebsflansch (12) der Drehmomentübertragungsvorrichtung angeordnet ist, **dadurch gekennzeichnet, dass** der Sekundär-Schwingungsdämpfer (14) axial innerhalb des Rotors (3) angeordnet ist und einen Schwingungstilger umfasst und der Schwingungstilger ein Fliehkraftpendel-Dämpfer ist.

2. Drehmomentübertragungsvorrichtung nach Anspruch 1, **dadurch gekennzeichnet, dass** die Kupplungsbetätigung mit einem Kupplungsaktor (10) und einer Tellerfeder (11) oder einem Drucktopf bezüglich des Abtriebsflanschs (12) kurbelwellenseitig angeordnet ist.

3. Drehmomentübertragungsvorrichtung nach Anspruch 2, **dadurch gekennzeichnet, dass** die Kupplungsbetätigung mit dem Kupplungsaktor (10) und der Tellerfeder (11) vollständig innerhalb des Rotors (3) der Elektromaschine (1) angeordnet ist.

4. Drehmomentübertragungsvorrichtung nach einem der Ansprüche 1 bis 3,
**dadurch gekennzeichnet, dass** die Trennkupplung (9) eine Lamellenkupplung ist.

5. Drehmomentübertragungsvorrichtung nach einem der Ansprüche 1 bis 4,
**dadurch gekennzeichnet, dass** eine Gehäuseabstützung (15) der Kupplungsbetätigung (10, 11) fest mit einem Statorgehäuse (4) verbunden ist.

## Claims

1. A torque transmission device for arrangement in a drive train of a hybrid vehicle having an internal combustion engine, a transmission and an electric machine (1), wherein the torque transmission device comprises the following: the electric machine (1), which is arranged in the torque transmission device and has a rotor (3) rotatable about a central longitudinal axis of the torque transmission device, a decoupler (9) with clutch actuation (10, 11) for decoupling the internal combustion engine from the transmission, a primary torsional vibration damper (6) on the crankshaft side, and a secondary torsional vibration damper (14) arranged radially inside the rotor (3) on the transmission side and arranged directly in an output flange (12) of the torque transmission device on the transmission side, **characterized in that** the secondary vibration damper (14) is arranged axially inside the rotor (3) and comprises a vibration absorber, and the vibration absorber is a centrifugal pendulum damper.

2. The torque transmission device according to claim 1, **characterized in that** the clutch actuation is arranged with a clutch actuator (10) and a disk spring (11) or a pressure pot on the crankshaft side with respect to the output flange (12).

3. The torque transmission device according to claim 2, **characterized in that** the clutch actuation with the clutch actuator (10) and the disk spring (11) is arranged completely inside the rotor (3) of the electric machine (1).

4. The torque transmission device according to one of claims 1 to 3, **characterized in that** the decoupler (9) is a multi-plate clutch.

5. The torque transmission device according to one of claims 1 to 4, **characterized in that** a housing support (15) of the clutch actuation (10, 11) is fixedly connected to a stator housing (4).

## Revendications

1. Dispositif de transmission de couple, à agencer dans une chaîne cinématique d'un véhicule hybride avec un moteur à combustion interne, une boîte de vitesses et une machine électrique (1), dans lequel le dispositif de transmission de couple présente :
la machine électrique (1), qui est disposée dans le dispositif de transmission de couple et présente un rotor (3) pouvant tourner autour d'un axe central longitudinal du dispositif de transmission de couple,
un embrayage de séparation (9) avec actionnement d'embrayage (10, 11) pour débrayer le moteur à combustion interne de la boîte de vitesses,
un amortisseur primaire de vibrations de torsion côté vilebrequin (6), et
un amortisseur secondaire de vibrations de torsion côté boîte de vitesses (14) disposé radialement à l'intérieur du rotor (3), qui est disposé directement dans une bride de sortie côté boîte de vitesses (12) du dispositif de transmission de couple,
**caractérisé en ce que** l'amortisseur secondaire de vibrations (14) est disposé axialement à l'intérieur du rotor (3) et comprend un atténuateur de vibrations et l'atténuateur de vibrations est un amortisseur à pendule centrifuge.

2. Dispositif de transmission de couple selon la revendication 1, **caractérisé en ce que** l'actionnement d'embrayage avec un actionneur d'embrayage (10) et une rondelle élastique (11) ou un godet de pression est disposé du côté du vilebrequin par rapport à la bride de sortie (12).

3. Dispositif de transmission de couple selon la revendication 2, **caractérisé en ce que** l'actionnement d'embrayage avec l'actionneur d'embrayage (10) et la rondelle élastique (11) est disposé entièrement à l'intérieur du rotor (3) de la machine électrique (1).

4. Dispositif de transmission de couple selon l'une quelconque des revendications 1 à 3, **caractérisé en ce que** l'embrayage de séparation (9) est un embrayage multidisque.

5. Dispositif de transmission de couple selon l'une quelconque des revendications 1 à 4, **caractérisé en ce qu'**un support de boîtier (15) de l'actionnement d'embrayage (10, 11) est solidaire d'un boîtier de stator (4).
